# EUROPÄISCHE PATENTANMELDUNG

(11) **EP 4 461 137 A1**
(43) Veröffentlichungstag der Anmeldung: **13.11.2024**
(21) Anmeldenummer: 23172138.2
(22) Anmeldetag: 08.05.2023
(51) Int. Cl.: A23G 1/00, A23G 1/22, A23G 3/34, A23G 3/02, A23P 30/10

(54) **MIKROSTRUKTURIERTE FORM ZUR KONFEKTIONIERUNG EINES HÄRTBAREN LEBENSMITTELS**

(71) Anmelder: Hans Brunner GmbH, 85625 Glonn (DE)
(72) Erfinder: Loidl, Johannes, 83104 Tuntenhausen (DE)
(74) Vertreter: Weickmann & Weickmann PartmbB

(57) **Zusammenfassung**

Die vorliegende Erfindung betrifft eine Form zur Konfektionierung eines härtbaren Lebensmittels, umfassend mindestens eine Seitenfläche, wobei die mindestens eine Seitenfläche einen Raum zur Aufnahme des Lebensmittels definieren, wobei mindestens eine der mindestens einen Seitenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Seitenfläche nicht mehr als 15 µm beträgt. Ferner betrifft die Erfindung eine Negativform, ein Verfahren zur Herstellung der erfindungsgemäßen Form und ein Verfahren zur Konfektionierung eines Lebensmittels unter Verwendung der erfindungsgemäßen Form.

## Beschreibung

Die vorliegende Erfindung betrifft eine mikrostrukturierte Form zur Konfektionierung eines härtbaren Lebensmittels. Ferner betrifft die Erfindung eine Negativform zur erfindungsgemäßen Form, die es insbesondere erlaubt die mikrostrukturierte Form durch Spritzguss herzustellen. Zudem wird ein Verfahren zur Herstellung der mikrostrukturierten Form mittels Spritzguss, ein Verfahren zur Herstellung eines konfektionierten Lebensmittelartikels unter Verwendung der mikrostrukturierten Form, sowie ein so erhältlicher Lebensmittelartikel offenbart.

Vorbekannte Verfahren zur Strukturierung eines härtbaren Lebensmittels wie beispielsweise Schokolade verwenden eine Konfektionierungsform mit Makrostrukturen, beispielsweise rippenartigen Vertiefungen, die sich auf das Lebensmittel übertragen. Da die Entformung eines gehärteten Lebensmittelartikels durch eine Strukturierung der Konfektionierungsform erschwert ist, weisen vorbekannte Formen lediglich eine Strukturierung an der Bodenfläche auf. Strukturierungen an Seitenflächen der Konfektionierungsform, insbesondere Mikrostrukturen mit einem Höhenunterschied senkrecht zur Seitenfläche werden bis dato nicht eingesetzt, da es beim Entformen zu einer unerwünschten Beschädigung oder sogar zu einem Zerbrechen des Lebensmittelartikels kommen kann.

DE 10 2020 123603 A1 beschreibt die Herstellung eines Schokoladenartikels in einer Konfektionierungsform mit Rippen. Eine zusätzliche Strukturierung erfolgt mittels eines Prägestempels auf der Rückseite des hergestellten Schokoladenartikels. Die Seitenflächen des Schokoladenartikels bleiben frei von Strukturierungen.

Es besteht somit der Bedarf an neuen Formen zur Konfektionierung härtbarer Lebensmittel, die an ihren Seitenflächen strukturiert sind und insbesondere eine filigrane, individuelle Strukturierung des Lebensmittelartikels mittels einer definierten dreidimensionalen Mikrostruktur erlauben.

Diese Aufgabe wird durch die erfindungsgemäße Form zur Konfektionierung eines härtbaren Lebensmittels (im Folgenden auch austauschbar als Konfektionierungsform bezeichnet) gelöst. Die beanspruchte Form zur Konfektionierung eines härtbaren Lebensmittels umfasst mindestens eine Seitenfläche, wobei die mindestens eine Seitenfläche einen Raum zur Aufnahme des Lebensmittels definieren, wobei mindestens eine der mindestens einen Seitenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Seitenfläche nicht mehr als 15 µm, bevorzugt 1,0-10,0 µm beträgt. Die Form zur Konfektionierung eines härtbaren Lebensmittels kann ferner eine Bodenfläche umfassen, wobei die mindestens eine Seitenfläche und die Bodenfläche den Raum zur Aufnahme des Lebensmittels definieren.

Die Form zur Konfektionierung eines Lebensmittels umfasst mindestens eine Seitenfläche. In einer Ausführungsform weist die Form mindestens zwei, mindestens drei oder mindestens vier Seitenflächen auf. In einer bevorzugten Ausführungsform weist die Form 1, 2, 3 oder 4 Seitenflächen auf. Mindestens eine der Seitenflächen ist an ihrer dem Raum zur Aufnahme des Lebensmittels zugewandten Seite mit einer definierten dreidimensionalen Mikrostruktur versehen, wobei der maximale Höhenunterschied der Mikrostruktur senkrecht zur Seitenfläche nicht mehr als 15 µm, bevorzugt 1,0-10,0 µm, insbesondere 6,0-8,0 µm beträgt. In einer bevorzugten Ausführungsform weist jede Seitenfläche an ihrer dem Raum zur Aufnahme des Lebensmittels zugewandten Seite eine solche Mikrostruktur auf.

Der Raum zur Aufnahme des Lebensmittels kann somit jede geometrische oder figürliche Form aufweisen. Insbesondere weist der Raum zur Aufnahme des Lebensmittels die Form eines Würfels, eines Quaders, eines Zylinders, eines Prismas, einer Pyramide, einer Kugel, einer Halbkugel, eines Kegels, eines Rings, eines Ovoids, eines Tiers wie beispielsweise eines Hasen oder Rentiers, einer Person wie beispielsweise eines Nikolauses oder Engels, eines Schokoladenriegels und dergleichen auf.

In einer bevorzugten Ausführungsform ist die Konfektionierungsform einteilig ausgebildet, wobei die Konfektionierungsform eine Öffnung zum Einfüllen des härtbaren Lebensmittels und/oder Entformen des gehärteten Lebensmittels umfasst. In einer anderen Ausführungsform ist die Konfektionierungsform mehrteilig ausgebildet. Beispielsweise kann die Konfektionierungsform zweiteilig ausgebildet sein, d.h. aus zwei Konfektionierungsformen entsprechend der vorliegenden Erfindung bestehen, wobei der Raum zur Aufnahme des Lebensmittels jeweils als Teilform einer der vorgenannten Formen ausgebildet ist. Eine Teilform bildet zusammen mit einer zweiten identischen oder unterschiedlichen Teilform eine der vorgenannten Formen des Raums zur Aufnahme des Lebensmittels aus.

Neben der mindestens einen Seitenfläche kann auch die Bodenfläche an ihrer dem Raum zur Aufnahme des Lebensmittels zugewandten Seite eine definierte dreidimensionale Mikrostruktur aufweisen, wobei der maximale Höhenunterschied der Mikrostruktur senkrecht zur Bodenfläche nicht mehr als 15 µm, bevorzugt 1,0-10,0 µm, insbesondere 6,0-8,0 µm beträgt.

Eine Mikrostruktur entsprechend der vorliegenden Erfindung kann Erhebungen an der dem Raum zur Aufnahme des Lebensmittels zugewandten Seite der mindestens einen Seitenfläche bzw. der Bodenfläche umfassen, wobei sich die Erhebungen in den Raum zur Aufnahme des Lebensmittels erstrecken. Der maximale Höhenunterschied der Erhebungen senkrecht zur Seiten- bzw. Bodenfläche beträgt dabei nicht mehr als 15 µm, bevorzugt 1,0-10,0 µm, insbesondere 6,0-8,0 µm. In einer bevorzugten Ausführungsform ist der Höhenunterschied senkrecht zur jeweiligen Seitenfläche bzw. Bodenfläche innerhalb einer Erhebung der Mikrostruktur konstant.

Alternativ oder zusätzlich kann eine Mikrostruktur entsprechend der vorliegenden Erfindung Vertiefungen an der dem Raum zur Aufnahme des Lebensmittels zugewandten Seite der mindestens einer Seitenfläche bzw. der Bodenfläche umfassen, wobei sich die Vertiefungen vom Raum zur Aufnahme des Lebensmittels weg erstrecken. Der maximale Höhenunterschied der Vertiefungen senkrecht zur Seiten- bzw. Bodenfläche beträgt dabei nicht mehr als 15 µm, bevorzugt 1,0-10,0 µm, insbesondere 6,0-8,0 µm. In einer bevorzugten Ausführungsform ist der Höhenunterschied senkrecht zur jeweiligen Seitenfläche bzw. Bodenfläche innerhalb einer Vertiefung der Mikrostruktur konstant.

Unter einem Höhenunterschied der Mikrostruktur zur Seiten- bzw. Bodenfläche wie hierin beschrieben, wird die Differenz zwischen der Höhe eines Punktes an einer Stelle der jeweiligen Seiten- bzw. Bodenfläche ohne Mikrostruktur an ihrer dem Raum zur Aufnahme des Lebensmittels zugewandten Seite und der Höhe eines Punktes an einer Stelle der jeweiligen Seiten- bzw. Bodenfläche innerhalb der Mikrostruktur an ihrer dem Raum zur Aufnahme des Lebensmittels zugewandten Seite verstanden. Die Höhe des Punktes an einer Stelle ohne Mikrostruktur wird dabei als Referenzpunkt mit einer Höhe von 0 µm festgelegt, wobei der Referenzpunkt insbesondere in unmittelbarer Nähe zur jeweiligen Mikrostruktur angeordnet ist. Die Höhe des Punktes innerhalb der Mikrostruktur wird senkrecht zur jeweiligen Seiten- bzw. Bodenfläche gemessen. Bildet die Seiten- bzw. Bodenfläche keine Ebene aus, d.h. ist sie gekrümmt, wird eine Referenzebene durch mindestens drei Referenzpunkte wie oben beschrieben in unmittelbarer Nähe zur jeweiligen Mikrostruktur definiert. In unmittelbarer Nähe zur Mikrostruktur im Sinne der vorliegenden Erfindung bedeutet, dass jeder Referenzpunkt maximal 100 µm, bevorzugt nicht mehr als 50 µm und insbesondere nicht mehr als 10 µm von der Mikrostruktur beabstandet ist. Geeignete Messverfahren für Höhenunterschiede der Seiten- bzw. Bodenfläche sind dem Fachmann bekannt und umfassen beispielsweise eine optische Messung mit einem Tiefenmikrometer, einem Konfokalmikroskop, einem Laser-Scanning-Mikroskop, einem Weißlichtinterferometer, oder einem Koordinatenmessgerät.

Die definierte Mikrostruktur kann jede beliebige Form aufweisen und beispielsweise ein Muster und/oder einen Schriftzug darstellen. Die Mikrostruktur kann sich dabei über die gesamte Seiten- bzw. Bodenfläche oder einen Teil davon erstrecken. Die Mikrostruktur der Seiten- bzw. Bodenflächen kann dabei identisch oder unterschiedlich sein. Beispielsweise kann die Bodenfläche, falls vorhanden, eine erste Mikrostruktur aufweisen und mindestens eine und bevorzugt alle Seitenflächen eine zweite Mikrostruktur aufweisen. In einer anderen Ausführungsform umfasst jede Seitenfläche eine unterschiedliche Mikrostruktur.

Vorteil der erfindungsgemäßen Form ist, dass ein gehärtetes Lebensmittel mit einer präzisen Mikrostrukturierung der Seitenfläche(n) und ggf. der Bodenfläche versehen und defektfrei aus der Form entnommen werden kann. Insbesondere eine Mikrostruktur mit konstantem Höhenunterschied erlaubt eine individuelle dreidimensionale Gestaltung der Seitenfläche(n) eines härtbaren Lebensmittels, ohne dass zur Entformöffnung hin auslaufende Strukturen von Nöten sind, um eine defektfreie Entformung zu ermöglichen. Basierend auf der erfindungsgemäßen Form kann somit eine ebene Mikrostrukturierung (d.h. mit konstantem Höhenunterschied senkrecht zur jeweiligen Seitenfläche bzw. Bodenfläche) auf die Fläche(n) eines härtbaren Lebensmittels aufgebracht und der Entformvorgang gleichzeitig beschleunigt werden.

Ferner kann die Bodenfläche an ihrer dem Raum zur Aufnahme des Lebensmittels zugewandten Seite eine definierte dreidimensionale Makrostruktur aufweist, wobei der maximale Höhenunterschied der Makrostruktur senkrecht zur Bodenfläche 20 µm - 1 mm beträgt. Unter einem Höhenunterschied der Makrostruktur zur Bodenfläche wie hierin beschrieben, wird die Differenz zwischen der Höhe eines Punktes an einer Stelle der Bodenfläche ohne Makrostruktur an ihrer dem Raum zur Aufnahme des Lebensmittels zugewandten Seite und der Höhe eines Punktes an einer Stelle der Bodenfläche innerhalb der Makrostruktur an ihrer dem Raum zur Aufnahme des Lebensmittels zugewandten Seite verstanden. Die Höhe des Punktes an einer Stelle ohne Makrostruktur wird dabei als Referenzpunkt mit einer Höhe von 0 µm festgelegt, wobei der Referenzpunkt insbesondere in unmittelbarer Nähe zur jeweiligen Makrostruktur angeordnet ist. Die Höhe des Punktes innerhalb der Makrostruktur wird senkrecht zur Bodenfläche gemessen. Bildet die Bodenfläche keine Ebene aus, d.h. ist sie gekrümmt, wird eine Referenzebene durch mindestens drei Referenzpunkte wie oben beschrieben in unmittelbarer Nähe zur jeweiligen Makrostruktur definiert. In unmittelbarer Nähe zur Makrostruktur im Sinne der vorliegenden Erfindung bedeutet, dass jeder Referenzpunkt maximal 5 mm, bevorzugt nicht mehr als 1 mm und insbesondere nicht mehr als 100 µm von der Mikrostruktur beabstandet ist. Geeignete Messverfahren für Höhenunterschiede der Bodenfläche sind dem Fachmann bekannt und umfassen beispielsweise eine optische Messung mit einem Tiefenmikrometer, einem Konfokalmikroskop, einem Laser-Scanning-Mikroskop, einem Weißlichtinterferometer oder einem Koordinatenmessgerät.

Die definierte dreidimensionale Makrostruktur kann jede beliebige Form aufweisen und beispielsweise ein Muster, eine Bruchkante und/oder einen Schriftzug darstellen. Die Makrostruktur kann sich dabei über die gesamte Bodenfläche oder einen Teil davon erstrecken.

Die erfindungsgemäße Form zur Konfektionierung eines härtbaren Lebensmittels kann z.B. durch ein Spritzguss- oder Thermopressverfahren hergestellt werden. Bevorzugt wird die erfindungsgemäße Konfektionierungsform durch ein Spritzgussverfahren hergestellt, wobei ein Material zur Ausbildung der Form in eine Negativform gespritzt wird, die eine Mikrostruktur aufweist, die komplementär zur Mikrostruktur der gewünschten Konfektionierungsform ist. Ein geeignetes Spritzgussverfahren bzw. Thermopressverfahren erfolgt insbesondere wie hierin beschrieben.

In einer Ausführungsform ist die Konfektionierungsform aus Kunststoff, bevorzugt einem thermoplastischen Kunststoff, ausgebildet. Geeignete Kunststoffe sind Polycarbonat, Polystyrol, Polypropylen, Polyethylen oder Mischungen davon. Ferner kann die Form Additive, wie Weichmacher, Farbstoffe, Antioxidantien, Schlagzähmodifizierer oder Mischungen davon umfassen. In einer bevorzugten Ausführung umfasst die Form Polycarbonat oder besteht bevorzugt aus Polycarbonat und ggf. geeigneten Additiven. Eine solche Polycarbonatform ist typischerweise ausreichend stabil, um ein härtbares Lebensmittel aufzunehmen und dessen defektfreie Aushärtung zu gewährleisten, und gleichzeitig typischerweise ausreichend flexibel, um eine schnelle und formstabile Entformung zu gewährleisten.

Die erfindungsgemäße Konfektionierungsform ist bevorzugt so ausgebildet, dass sie ein härtbares Lebensmittel aufnehmen kann. Das heißt, sie weist insbesondere eine Einfüllöffnung für das härtbare Lebensmittel und eine Entformöffnung für das gehärtete Lebensmittel auf. In einer bevorzugten Ausführungsform ist die Einfüll- und Entformöffnung identisch.

Das härtbare Lebensmittel kann beispielsweise Schokolade, bevorzugt eine flüssige Schokoladenzubereitung wie erhitzte Schokolade, Teig, bevorzugt roher Teig in flüssiger Form, Fett, bevorzugt erhitztes Fett in flüssiger Form, Zugaben, oder Gemische davon umfassen. Eine geeignete Schokoladenzubereitung umfasst beispielsweise Kakaomasse, Zucker, Kakaobutter, ggf. Milchpulver und Geschmacksstoffe. Eine geeignete Teigzubereitung umfasst beispielsweise Getreidemehl, Fett, Wasser, Zucker, ggf. Triebmittel wie Hefe und Geschmacksstoffe. Geeignete Zugaben umfassen beispielsweise Einwürf wie Nüsse oder sonstige Geschmackszugaben. Insbesondere handelt es sich um eine Form zur Herstellung einer Schokoladentafel, eines Schokoladenriegels, einer Schokoladenpraline oder eines Schokoladenlollies.

In einer Ausführungsform umfasst die Form einen einzelnen Raum zur Aufnahme eines härtbaren Lebensmittels. In einer anderen Ausführungsform umfasst die Form mehrere voneinander getrennte Räume zur Aufnahme eines härtbaren Lebensmittels. Eine solche Form mit mehreren Räumen erlaubt beispielsweise die simultane Herstellung von mehreren Lebensmittelartikeln wie mehreren Schokoladentafel, -riegeln, -pralinen oder -lollies.

Ein weiterer Aspekt der vorliegenden Erfindung betrifft eine Negativform zur Form zur Konfektionierung eines härtbaren Lebensmittels wie hierin beschrieben. Die Negativform ist komplementär zur erfindungsgemäßen Konfektionierungsform und weist insbesondere eine Mikrostruktur auf, die komplementär zur Mikrostruktur der mindestens einen Seitenfläche und ggf. zur Mikrostruktur der Bodenfläche der Konfektionierungsform wie hierin beschrieben ist. Komplementär zur Mikrostruktur der Konfektionierungsform bedeutet, dass die Mikrostruktur der Negativform sowohl in ihrer Lage als auch in ihrer Form komplementär zur Mikrostruktur der Konfektionierungsform der vorliegenden Erfindung ist.

Die Mikrostruktur der Negativform kann unter Verwendung eines Lasers, insbesondere mittels eines Lasercutters, erhalten werden. Geeignete Laser sind beispielsweise CO₂-Laser, YAG-Laser oder Faserlaser und können eine Wellenlänge von 1060-10600 nm und eine Leistung von 1-100W aufweisen. In einer bevorzugten Ausführungsform ist der Laser bei der Strukturierung der Negativform senkrecht zur zu strukturierenden Fläche ausgerichtet und erzeugt die Mikrostruktur durch Sublimation des Materials der Negativform.

Der Einsatz eines Lasers erlaubt, im Gegensatz zur vorbekannten Verwendung einer Fräse zur Strukturierung einer Negativform, eine präzise Strukturierung, die insbesondere durch ein gerades Design (d.h. eine Mikrostruktur mit konstantem Höhenunterschied senkrecht zur jeweiligen Seitenfläche bzw. Bodenfläche) gekennzeichnet ist. Eine Strukturierung mittels Laser kann mit einer Genauigkeit von ±9,0 µm erfolgen. Im Gegensatz dazu sind vorbekannte Fräsverfahren in ihrer Genauigkeit limitiert und weisen eine Abweichung in der Genauigkeit von beispielsweise ± 0,010 mm auch innerhalb einer einzelnen Struktur auf.

Ferner kann die Negativform eine Makrostruktur aufweisen, die komplementär zur Makrostruktur der Konfektionierungsform wie hierin beschrieben ist. Komplementär zur Makrostruktur der Konfektionierungsform bedeutet, dass die Makrostruktur der Negativform sowohl in ihrer Lage als auch in ihrer Form komplementär zur Makrostruktur der Konfektionierungsform der vorliegenden Erfindung ist. Die Herstellung einer solchen Makrostruktur ist dem Fachmann bekannt und umfasst insbesondere eine Strukturierung mittels einer Fräse, wie beispielsweise einer 3-5 Achs-CNC Fräsmaschine.

Die Negativform kann aus Metall oder Kunststoff, bevorzugt aus Aluminium, Messing oder Edelstahl hergestellt sein. In einer bevorzugten Ausführungsform ist die Negativform eine Spritzgussform und erlaubt eine Herstellung der erfindungsgemäßen Konfektionierungsform durch ein Spritzgussverfahren, beispielsweise ein Spritzgussverfahren wie hierin beschrieben. Die erfindungsgemäße Negativform ermöglicht somit die Herstellung einer verbesserten Konfektionierungsform wie hierin beschrieben, die insbesondere eine verbesserte Strukturierung und Entformung eines härtbaren Lebensmittels erlaubt.

Ein weiterer Aspekt der vorliegenden Erfindung betrifft ein Verfahren zur Herstellung einer Konfektionierungsform wie hierin beschrieben, durch Spritzguss. In einer bevorzugten Ausführungsform umfasst das Verfahren die folgenden Schritte:
a) Einspritzen eines härtbaren Formmaterials in eine Spritzgussnegativform, die eine Mikrostruktur aufweist, die komplementär zur Mikrostruktur der mindestens einen Seitenfläche und ggf. zur Mikrostruktur der Bodenfläche der Form zur Konfektionierung eines härtbaren Lebensmittels wie hierin beschrieben ist,
b) Abkühlen des eingespritzten Formmaterials, und
c) Entformen des abgekühlten Formmaterials aus der Spritzgussnegativform um die Konfektionierungsform zu erhalten.

Das Material aus dem die Konfektionierungsform hergestellt wird, d.h. das Formmaterial, ist bevorzugt Kunststoff und insbesondere ein thermoplastischer Kunststoff. In einer bevorzugten Ausführungsform umfasst das Formmaterial Polycarbonat oder besteht bevorzugt daraus. Zusätzlich kann das Formmaterial Additive wie Weichmacher, Farbstoffe, Antioxidantien, UV-Stabilisator, Schlagzähmodifizierer oder Mischungen davon umfassen.

Das härtbare Formmaterial wird in Schritt a) insbesondere in fließfähiger Form eingespritzt. Bevorzugt wird das Formmaterial als Feststoff, z.B. als Granulat, bereitgestellt und vor Durchführung des Schritts a) verflüssigt (d.h. plastifiziert). Beispielsweise kann das feste Formmaterial auf eine Temperatur von 280-320°C erhitzt werden, um ein härtbares Formmaterial zu erhalten. In einer Ausführungsform wird das Formmaterial als Granulat in den Zwischenräumen einer rotierenden Schnecke innerhalb eines beheizbaren Mantels eingebracht. Das Formmaterial wird durch Rotation der Schnecke in Richtung der Schneckenspitze gefördert und dadurch verdichtet und homogenisiert. Der beheizbare Mantel erwärmt und plastifiziert das Material. Das Prinzip ist dem Fachmann von kommerziell erhältlichen Schnecken- oder Doppelschneckenextrudern bekannt.

Schritt a) umfasst ein Einspritzen des härtbaren Formmaterials in eine Spritzgussnegativform. Die Spritzgussnegativform ist bevorzugt eine Negativform wie hierin beschrieben. Das Einspritzen erfolgt bevorzugt bei erhöhtem Druck, wie 500-2500 bar. Beispielsweise kann an die Schnecke zum Plastifizieren des Formmaterials eine Düse angebracht sein, die ein direktes Einspritzen in die Spritzgussnegativform erlaubt.

In der Spritzgussnegativform herrscht Atmosphärendruck (ca. 1013 hPa). Dies erlaubt ein vollständiges Ausfüllen der Spritzgussnegativform mit dem Formmaterial und insbesondere eine fehlerfreie Übertragung der Mikrostruktur der Spritzgussnegativform auf die resultierende, spritzgegossene Form.

Die Spritzgussnegativform hat eine geringere Temperatur als das härtbare Formmaterial beim Einspritzen, zwischen 80-130°C. Durch Inkontaktbringen des härtbaren Formmaterials mit der Spritzgussnegativform kommt es somit zu einem Abkühlen des Formmaterials, was zu einer Volumenreduktion des Formmaterials führen kann. In einer bevorzugten Ausführungsform umfasst Schritt a) daher ferner ein Nachdrücken des Formmaterials in die Spritzgussnegativform, um ein vollständiges Ausfüllen der Spritzgussnegativform mit dem Formmaterial zu gewährleisten und insbesondere eine Volumenreduktion des Formmaterials in der Spritzgussnegativform durch (teilweises) Abkühlen auszugleichen.

In Schritt b) wird das Formmaterial abgekühlt, insbesondere durch Inkontaktkommen mit der Spritzgussnegativform. Die Spritzgussnegativform kann eine Kühlvorrichtung aufweisen, z.B. eine Wasserkühlung oder eine Luftkühlung. Die Schritte a) und b) können somit zumindest teilweise überlagern. Das in Schritt b) erhaltene, abgekühlte Formmaterial kann eine Temperatur von 148°C oder weniger, bevorzugt 148-120°C, insbesondere bevorzugt etwa 130°C aufweisen. Der Abkühlschritt b) führt zu einem Härten des Formmaterials und kann beispielsweise eine Dauer von 30 bis 300 s, bevorzugt 60 s haben.

In Schritt c) wird das abgekühlte und gehärtete Formmaterial aus der Spritzgussnegativform entformt, um die erfindungsgemäße Form zur Konfektionierung zu erhalten. Insbesondere ist die Spritzgussnegativform mehrteilig ausgebildet, sodass die Konfektionierungsform durch zerstörungsfreies Öffnen der Spritzgussnegativform entformt werden kann. Ggf. wird die so erhaltene Konfektionierungsform noch mindestens einem Weiterverarbeitungsschritt unterzogen, wie beispielsweise einem Entfernen des Angusses, d.h. des Teils des erhaltene Spritzgussprodukts, das nicht zum Formteil als solches gehört, sondern aus dem notwendigen Einspritzweg des Formmaterials resultiert.

In einer alternativen Ausführungsform kann die erfindungsgemäße Form zur Konfektionierung eines härtbaren Lebensmittels durch ein Thermopressverfahren hergestellt werden. Ein geeignetes Thermopressverfahren umfasst:
1. Erwärmen einer Kunststoffplatine auf eine Temperatur im thermoelastischen Bereich des Kunststoffs, beispielsweise 150-220 °C, insbesondere 180°C;
2. Abformen einer Thermopressnegativform mit der Kunststoffplatine aus Schritt 1 unter Verwendung eines Druckunterschiedes in einer Thermopressvorrichtung, um eine Kunststoffform zu erzeugen; und
3. Entformen der Kunststoffform aus Schritt 2, bevorzugt bei einer Temperatur zwischen 20 und 124°C.

Geeignete Thermopressvorrichtungen sind dem Fachmann bekannt. In Schritt 2 kommt insbesondere eine beheizte Thermopressvorrichtung zum Einsatz, bevorzugt auf eine Temperatur von 90-140°C. Der Druckunterschied kann ein Unter- oder Überdruck relativ zum Atmosphärendruck (1013 hPa) sein. Die Kunststoffplatine besteht aus einem Kunststoff wie hierin für die Konfektionierungsform beschrieben.

Eine Thermopressnegativform ist bevorzugt eine Negativform wie hierin beschrieben. Sie weist eine Mikrostruktur auf, die komplementär zur Mikrostruktur der gewünschten Konfektionierungsform ist.

Ein weiterer Aspekt der Erfindung betrifft ein Verfahren zum Herstellen eines konfektionierten Lebensmittelartikels, der an mindestens einer Fläche eine definierte dreidimensionale Mikrostruktur aufweist, wobei das Verfahren umfasst:
a) Einfüllen eines härtbaren Lebensmittels in die erfindungsgemäße Konfektionierungsform wie hierin beschrieben,
b) Härten des Lebensmittels um einen Lebensmittelartikel mit einer definierten dreidimensionalen Mikrostruktur zu formen, und
c) Entformen des Lebensmittelartikels aus der Form.

Das Einfüllen eines härtbaren Lebensmittels in Schritt a) kann beispielsweise durch Gießen, Schütten oder Spritzen erfolgen. Das härtbare Lebensmittel ist insbesondere temperaturhärtbar und kann durch Abkühlen (wie bei erhitzter Schokolade) oder Erhitzen (wie bei rohem Teig) gehärtet werden. Bevorzugt umfasst das härtbare Lebensmittel Schokolade, Teig, Fett, Zugaben, oder Gemische davon wie hierin beschrieben. Bevorzugt wird das härtbare Lebensmittel in flüssiger Form bereitgestellt.

Ferner kann Schritt a) ein gleichmäßiges Verteilen des härtbaren Lebensmittels in der Form umfassen. Das Verteilen erfolgt insbesondere mittels Rütteln, Rotieren und/oder Schleudern der Form.

In Schritt b) wird das eingefüllte Lebensmittel in der Form zur Konfektionierung gehärtet, um einen Lebensmittelartikel mit einer definierten dreidimensionalen Mikrostruktur zu formen. Das Härten kann durch Temperieren des Lebensmittels auf eine Temperatur von 25-40°C, bevorzugt 28-31°C erfolgen und insbesondere ein Abkühlen des formbaren Lebensmittels bewirken. In einer anderen Ausführungsform kann das Härten durch Temperieren des Lebensmittels auf eine Temperatur von 100-250°C, bevorzugt etwa 180°C, erfolgen und insbesondere ein Backen des formbaren Lebensmittels bewirken.

In Schritt c) wird der Lebensmittelartikel entformt, beispielsweise durch Komprimieren der Konfektionierungsform. Der Lebensmittelartikel kann beispielsweise eine Schokoladentafel, ein Schokoladenriegel, eine Schokoladenpraline oder ein Schokoladenlolli sein. In einer Ausführungsform wird ein einzelner Lebensmittelartikel erhalten. In einer anderen Ausführungsform wird das erfindungsgemäße Verfahren zum Herstellen eines konfektionierten Lebensmittelartikels simultan an mehreren Konfektionierungsformen und/oder an einer Konfektionierungsform mit mehreren Räumen zur Aufnahme eines Lebensmittels durchgeführt, um mehrere Lebensmittelartikel zu erhalten.

In einem weiteren Aspekt betrifft die vorliegende Erfindung einen Lebensmittelartikel, erhältlich durch das hierin beschriebene Verfahren zum Herstellen eines konfektionierten Lebensmittelartikels. Der erfindungsgemäße Lebensmittelartikel ist durch eine definierte Mikrostruktur an mindestens einer Seitenfläche charakterisiert.

Die folgenden Punkte sind Gegenstand der Erfindung:
1. Form zur Konfektionierung eines härtbaren Lebensmittels, umfassend mindestens eine Seitenfläche, wobei die mindestens eine Seitenfläche einen Raum zur Aufnahme des Lebensmittels definieren, wobei mindestens eine der mindestens einen Seitenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Seitenfläche nicht mehr als 15 µm, bevorzugt 1,0-10,0 µm, insbesondere 6,0-8,0 µm beträgt.
2. Form nach Punkt 1, ferner umfassend eine Bodenfläche, wobei die mindestens eine Seitenfläche und die Bodenfläche den Raum zur Aufnahme des Lebensmittels definieren.
3. Form nach Punkt 2, wobei die Bodenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Bodenfläche nicht mehr als 15 µm, bevorzugt 1,0-10,0 µm, insbesondere 6,0-8,0 µm beträgt.
4. Form nach einem der vorhergehenden Punkte, wobei die Mikrostruktur Erhebungen an der dem Raum zur Aufnahme des Lebensmittels zugewandten Seite der mindestens einen Seitenfläche und ggf. an der dem Raum zur Aufnahme des Lebensmittels zugewandten Seite der Bodenfläche umfasst, die sich in den Raum zur Aufnahme des Lebensmittels erstrecken und wobei bevorzugt der Höhenunterschied senkrecht zur jeweiligen Seitenfläche bzw. Bodenfläche innerhalb einer Erhebung der Mikrostruktur konstant ist.
5. Form nach einem der vorhergehenden Punkte, wobei die Mikrostruktur Vertiefungen an der dem Raum zur Aufnahme des Lebensmittels zugewandten Seite der mindestens einer Seitenfläche und ggf. an der dem Raum zur Aufnahme des Lebensmittels zugewandten Seite der Bodenfläche umfasst, die sich vom Raum zur Aufnahme des Lebensmittels weg erstrecken und wobei bevorzugt der Höhenunterschied senkrecht zur jeweiligen Seitenfläche bzw. Bodenfläche innerhalb einer Vertiefung der Mikrostruktur konstant ist.
6. Form nach einem der vorhergehenden Punkte, wobei die Form durch ein Spritzguss- oder Thermopressverfahren hergestellt ist.
7. Form nach einem der vorhergehenden Punkte, wobei jede Seitenfläche an ihrer dem Raum zur Aufnahme des Lebensmittels zugewandten Seite eine definierte dreidimensionale Mikrostruktur aufweist.
8. Form nach einem der vorhergehenden Punkte, wobei die Form mindestens 3 Seitenflächen aufweist.
9. Form nach einem der vorhergehenden Punkte, wobei die Form aus Kunststoff, bevorzugt einem thermoplastischen Kunststoff ist und insbesondere Polycarbonat umfasst und bevorzugt daraus besteht.
10. Form nach einem der vorhergehenden Punkte, wobei das Lebensmittel Schokolade, Teig, Fett, Zugaben, oder Gemische davon umfasst.
11. Form nach einem der vorhergehenden Punkte, wobei die Form zur Herstellung einer Schokoladentafel, eines Schokoladenriegels, einer Schokoladenpraline oder eines Schokoladenlollies ausgebildet ist.
12. Form nach einem der vorhergehenden Punkte, wobei die definierte Mikrostruktur ein Muster und/oder einen Schriftzug darstellt.
13. Form nach einem der vorhergehenden Punkte, wobei die Form einen Raum oder mehrere voneinander getrennte Räume zur Aufnahme des Lebensmittels umfasst.
14. Form nach einem der Punkte 2-13, wobei die Bodenfläche an ihrer dem Raum zur Aufnahme des Lebensmittels zugewandten Seite ferner eine definierte dreidimensionale Makrostruktur aufweist, wobei der maximale Höhenunterschied der Makrostruktur senkrecht zur Bodenfläche 20 µm - 1 mm beträgt.
15. Negativform zur Form nach einem der vorhergehenden Punkte.
16. Negativform nach Punkt 15, die eine Mikrostruktur aufweist, die komplementär zur Mikrostruktur der mindestens einen Seitenfläche und ggf. zur Mikrostruktur der Bodenfläche der Form nach einem der Punkte 1-14 ist.
17. Negativform nach Punkt 16, wobei die Mikrostruktur unter Verwendung eines Lasers, insbesondere mittels eines Lasercutters, erhalten ist.
18. Negativform nach einem der Punkte 15-17, die aus Metall oder Kunststoff, bevorzugt aus Aluminium, Messing oder Edelstahl hergestellt ist.
19. Negativform nach einem der Punkte 15-18, die eine Spritzgussform ist.
20. Negativform nach einem der Punkte 15-19, die eine Makrostruktur aufweist, die komplementär zur Makrostruktur der Form nach Punkt 14 ist.
21. Negativform nach Punkt 20, wobei die Makrostruktur unter Verwendung einer Fräse erhalten ist.
22. Verfahren zur Herstellung einer Form nach einem der Punkte 1-14 durch Spritzguss eines Formmaterials.
23. Verfahren nach Punkt 22, umfassend die folgenden Schritte:
   a) Einspritzen eines härtbaren Formmaterials in eine Spritzgussnegativform, die eine Mikrostruktur aufweist, die komplementär zur Mikrostruktur der mindestens einen Seitenfläche und ggf. zur Mikrostruktur der Bodenfläche der Form nach einem der Punkte 1-14 ist,
   b) Abkühlen des eingespritzten Formmaterials, und
   c) Entformen des abgekühlten Formmaterials aus der Spritzgussnegativform um eine Form nach einem der Punkte 1-14 zu erhalten.
24. Verfahren nach einem der Punkte 22-23, wobei das Formmaterial Kunststoff und bevorzugt thermoplastischer Kunststoff ist.
25. Verfahren nach einem der Punkte 22-24, wobei das Formmaterial Polycarbonat umfasst und bevorzugt daraus besteht.
26. Verfahren nach einem der Punkte 23-25, wobei das härtbare Formmaterial in Schritt a) flüssig ist.
27. Verfahren nach einem der Punkte 23-26, wobei die Spritzgussnegativform eine Negativform nach einem der Punkte 15-21 ist.
28. Verfahren nach einem der Punkte 23-27, wobei Schritt a) ferne ein Nachdrücken des eingespritzten Formmaterials in die Spritzgussnegativform umfasst.
29. Verfahren nach einem der Punkte 23-28, wobei Schritt b) durch Kühlen der Spritzgussnegativform, bevorzugt mit Wasser, erfolgt.
30. Verfahren nach einem der Punkte 23-29, wobei das Formmaterial in Schritt b) auf 148°C oder weniger, bevorzugt 148-120°C, insbesondere bevorzugt 130°C abgekühlt wird.
31. Verfahren zum Herstellen eines konfektionierten Lebensmittelartikels, der an mindestens einer Fläche eine definierte dreidimensionale Mikrostruktur aufweist, wobei das Verfahren umfasst:
   a) Einfüllen eines härtbaren Lebensmittels in die Form nach einem der Punkte 1-14,
   b) Härten des Lebensmittels um einen Lebensmittelartikel mit einer definierten dreidimensionalen Mikrostruktur zu formen, und
   c) Entformen des Lebensmittelartikels aus der Form.
32. Verfahren nach Punkt 31, wobei Schritt b) bei 25-40°C, bevorzugt 28-31°C erfolgt.
33. Verfahren nach einem der Punkte 31-32, wobei Schritt a) ferner ein gleichmäßiges Verteilen des härtbaren Lebensmittels in der Form umfasst.
34. Verfahren nach Punkt 33, wobei das Verteilen des Lebensmittels mittels Rütteln und/oder Schleudern der Form erfolgt.
35. Verfahren nach einem der Punkte 31-34, wobei das härtbare Lebensmittel Schokolade, Teig, Fett, Zugaben, oder Gemische davon umfasst.
36. Verfahren nach einem der Punkte 31-35, wobei der Lebensmittelartikel eine Schokoladentafel, ein Schokoladenriegel, eine Schokoladenpraline oder ein Schokoladenlolli ist.
37. Lebensmittelartikel, erhältlich durch das Verfahren nach einem der Punkte 31-36.

## Patentansprüche

1. Form zur Konfektionierung eines härtbaren Lebensmittels, umfassend mindestens eine Seitenfläche, wobei die mindestens eine Seitenfläche einen Raum zur Aufnahme des Lebensmittels definieren, wobei mindestens eine der mindestens einen Seitenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Seitenfläche nicht mehr als 15 µm, bevorzugt 1,0-10,0 µm, insbesondere 6,0-8,0 µm beträgt.

2. Form nach Anspruch 1, ferner umfassend eine Bodenfläche, wobei die mindestens eine Seitenfläche und die Bodenfläche den Raum zur Aufnahme des Lebensmittels definieren, bevorzugt wobei die Bodenfläche an ihrer dem Raum zur Aufnahme des Lebensmittels zugewandten Seite eine definierte dreidimensionale Mikrostruktur aufweist, wobei der maximale Höhenunterschied der Mikrostruktur senkrecht zur Bodenfläche nicht mehr als 15 µm, bevorzugt 1,0-10,0 µm, insbesondere 6,0-8,0 µm beträgt.

3. Form nach einem der vorhergehenden Ansprüche, wobei die Mikrostruktur Erhebungen an der dem Raum zur Aufnahme des Lebensmittels zugewandten Seite der mindestens einen Seitenfläche und ggf. an der dem Raum zur Aufnahme des Lebensmittels zugewandten Seite der Bodenfläche umfasst die sich in den Raum zur Aufnahme des Lebensmittels erstrecken und/oder wobei die Mikrostruktur Vertiefungen an der dem Raum zur Aufnahme des Lebensmittels zugewandten Seite der mindestens einer Seitenfläche und ggf. an der dem Raum zur Aufnahme des Lebensmittels zugewandten Seite der Bodenfläche umfasst, die sich vom Raum zur Aufnahme des Lebensmittels weg erstrecken, wobei bevorzugt der Höhenunterschied senkrecht zur jeweiligen Seitenfläche bzw. Bodenfläche innerhalb einer Erhebung der Mikrostruktur konstant ist.

4. Form nach einem der vorhergehenden Ansprüche, wobei die Form aus Kunststoff, bevorzugt einem thermoplastischen Kunststoff, ist und insbesondere Polycarbonat umfasst und bevorzugt daraus besteht.

5. Form nach einem der vorhergehenden Ansprüche, wobei die Form einen Raum oder mehrere voneinander getrennte Räume zur Aufnahme des Lebensmittels umfasst.

6. Form nach einem der Ansprüche 2-5, wobei die Bodenfläche an ihrer dem Raum zur Aufnahme des Lebensmittels zugewandten Seite ferner eine definierte dreidimensionale Makrostruktur aufweist, wobei der maximale Höhenunterschied der Makrostruktur senkrecht zur Bodenfläche 20 µm - 1 mm beträgt.

7. Negativform zur Form nach einem der vorhergehenden Ansprüche, die bevorzugt eine Mikrostruktur aufweist, die komplementär zur Mikrostruktur der mindestens einen Seitenfläche und ggf. zur Mikrostruktur der Bodenfläche der Form nach einem der Ansprüche 1-6 ist, und insbesondere eine Spritzgussform ist.

8. Negativform nach Anspruch 7, die aus Metall oder Kunststoff, bevorzugt aus Aluminium, Messing oder Edelstahl hergestellt ist.

9. Negativform nach einem der Ansprüche 7-8, die eine Makrostruktur aufweist, die komplementär zur Makrostruktur der Form nach Anspruch 6 ist und bevorzugt wobei die Makrostruktur unter Verwendung einer Fräse erhalten ist und/oder wobei die Mikrostruktur unter Verwendung eines Lasers, insbesondere mittels eines Lasercutters, erhalten ist.

10. Verfahren zur Herstellung einer Form nach einem der Ansprüche 1-6 durch Spritzguss eines Formmaterials, wobei das Verfahren bevorzugt die folgenden Schritte umfasst:
a) Einspritzen eines härtbaren Formmaterials in eine Spritzgussnegativform, die eine Mikrostruktur aufweist, die komplementär zur Mikrostruktur der mindestens einen Seitenfläche und ggf. zur Mikrostruktur der Bodenfläche der Form nach einem der Ansprüche 1-6 ist, wobei das härtbare Formmaterial bevorzugt flüssig ist,
ggf. Nachdrücken des eingespritzten Formmaterials in die Spritzgussnegativform,
b) Abkühlen des eingespritzten Formmaterials, und
c) Entformen des abgekühlten Formmaterials aus der Spritzgussnegativform um die Form zu erhalten.

11. Verfahren nach Anspruch 10, wobei die Spritzgussnegativform eine Negativform nach einem der Ansprüche 7-9 ist.

12. Verfahren nach einem der Ansprüche 10-11, wobei Schritt b) durch Kühlen der Spritzgussnegativform, bevorzugt mit Wasser, erfolgt und/oder wobei das Formmaterial in Schritt b) auf 148°C oder weniger, bevorzugt 148-120°C, insbesondere 130°C abgekühlt wird.

13. Verfahren zum Herstellen eines konfektionierten Lebensmittelartikels, der an mindestens einer Fläche eine definierte dreidimensionale Mikrostruktur aufweist, wobei das Verfahren umfasst:
a) Einfüllen eines härtbaren Lebensmittels in die Form nach einem der Ansprüche 1-6, und ggf. ein gleichmäßiges Verteilen des härtbaren Lebensmittels in der Form,
b) Härten des Lebensmittels um einen Lebensmittelartikel mit einer definierten dreidimensionalen Mikrostruktur zu formen, bevorzugt und wobei Schritt b) bei 25-40°C, insbesondere 28-31°C erfolgt, und
c) Entformen des Lebensmittelartikels aus der Form.

14. Verfahren nach Anspruch 13, wobei das härtbare Lebensmittel Schokolade, Teig, Fett, Zugaben, oder Gemische davon umfasst und/oder wobei der Lebensmittelartikel eine Schokoladentafel, ein Schokoladenriegel, eine Schokoladenpraline oder ein Schokoladenlolli ist.

15. Lebensmittelartikel, erhältlich durch das Verfahren nach einem der Ansprüche 13-14.
